(19) Europäisches Patentamt
European Patent Office
Office européen des brevets

(11) **EP 2 159 591 A1**

(12) **EUROPÄISCHE PATENTANMELDUNG**

(43) Veröffentlichungstag:
**03.03.2010 Patentblatt 2010/09**

(51) Int Cl.:
***G01S 1/00*** *(2006.01)*

(21) Anmeldenummer: **09010692.3**

(22) Anmeldetag: **20.08.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **02.09.2008 DE 102008045323**

(71) Anmelder: **Astrium GmbH**
**82024 Taufkirchen (DE)**

(72) Erfinder: **Trautenberg, Hans, L., Dr.**
**85521 Ottobrunn (DE)**

(74) Vertreter: **Hummel, Adam**
**EADS Deutschland GmbH**
**Patentabteilung**
**81663 München (DE)**

(54) **Verfahren und Vorrichtung zur Optimierung von Statusbenachrichtungen in einem Satellitennavigationssystem**

(57) Die Erfindung betrifft ein Verfahren zur Optimierung von Statusbenachrichtigungen in einem Satellitennavigationssystem (10), das ein Raumsegment (12) mit mehreren Satelliten (14), die Navigationssignale (16) zum Empfangen und Auswerten durch Nutzungssysteme (18) für die Positionsbestimmung aussenden, und ein Bodensegment (20) mit mehreren Beobachtungsstationen (22), welche die Satelliten (14) überwachen, umfasst, wobei ein Schwellwert für die Meldung, dass der Fehler eines Satelliten nicht mehr akzeptabel ist, ortsabhängig festgelegt wird.

Fig.

**Beschreibung**

Die Erfindung betrifft ein Verfahren und eine Vorrichtung zur Optimierung von Statusbenachrichtigungen in einem Satellitennavigationssystem gemäß Anspruch 1 bzw. 6

Satellitensysteme zur weltweiten Navigation (GNSS; GNSS = Global Navigation Satellite System, kurz Satellitennavigationssystem) werden zur Positionsbestimmung und Navigation auf der Erde und in der Luft eingesetzt. GNSS Systeme, wie beispielsweise das im Aufbau befindliche europäische Satellitennavigationssystem (im Folgenden auch als Galileo-System oder kurz Galileo bezeichnet) weisen ein, eine Mehrzahl von Satelliten umfassendes Satelliten-System (Raumsegment), ein mit einer zentralen Berechnungsstation verbundenes erdfestes Empfangseinrichtungs-System (Bodensegment), das mehrere Bodenstationen sowie Galileo-Sensorstationen umfasst, sowie Nutzungssysteme auf, welche die von den Satelliten per Funk übermittelten Satellitensignale insbesondere zur Navigation auswerten und nutzen.

In einem GNSS erfordert eine genaue Detektion der Position eines Nutzers sowohl lokale als auch globale Integrität. Integrität bedeutet insbesondere, dass einerseits das GNSS imstande ist, einen Nutzer innerhalb einer bestimmten Zeitspanne zu warnen, wenn Teile des GNSS nicht für die Navigation benutzt werden sollen, beispielsweise bei Ausfall von Systemkomponenten, und dass andererseits der Nutzer den Navigationsdaten, die er über Satellitennavigationssignale von den Satelliten des GNSS erhält, vertrauen kann, insbesondere sich auf die Genauigkeit der empfangenen Navigationsdaten verlassen kann.

Beim Integritätskonzept von Galileo ist geplant, jeden Satellit vom erdfesten Empfangseinrichtungs-System zu überwachen und entsprechende Nachrichten-Signale bezüglich des Verhaltens jedes Satelliten an Nutzungssysteme zu übertragen. Insbesondere sollen eine geschätzte Signal-In-Space-Accuracy (SISA) eines Satelliten, eine geschätzte Signal-In-Space-Monitoring-Accuracy (SISMA) und im Bedarfsfall eine einfache Fehleranzeige "Not OK" (das sogenannte Integrity Flag IF) bei einem fehlerhaften Satelliten an Nutzungssysteme übermittelt werden. Zusätzlich wird noch der Schwellwert für die Meldung, dass der Fehler eines Satelliten nicht mehr akzeptabel ist, der auch als IF Threshold bezeichnet wird, an die Nutzungssysteme übertragen. Dieser Schwellwert ist unter anderem eine Funktion von SISA und SISMA. Sowohl SISA wie auch SISMA sind im Integritätskonzept von Galileo Benutzerpositionsunabhängig. SISA und SISMA können in Galileo von der Position des Satelliten abhängen.

Galileo soll auch fähig sein, das Signal-In-Space (SIS) innerhalb des Bodensegments durch Benutzung der Messungen von den einzelnen Galileo-Sensorstationen zu überwachen. Mithilfe der bekannten Positionen der Galileo-Sensorstationen kann dann die aktuelle Position eines Satelliten und damit der maximale Fehler des Satelliten bzw. des von ihm ausgesandten Signals im Raum, der sogenannte Signal-In-Space-Error (SISE) geschätzt werden.

Eine Voraussage der Verteilung des SISE kann durch eine Gaussverteilung mit der kleinsten Standardabweichung dargestellt werden. Diese Voraussage wird als die bereits oben erwähnte Signal-In-Space-Accuracy (SISA) bezeichnet. Mit der SISA kann die Differenz zwischen der aktuellen 4-dimensionalen Position (Orbit und Uhrzeit) des Phasenzentrums eines Satelliten und der vorausgesagten 4-dimensionalen Position des Phasenzentrums, die in einer Navigationsnachricht enthalten ist, beschrieben werden.

Die Schätzung des SISE ist allerdings ein fehlerträchtiger Prozess. Daher wird in der Regel angenommen, dass die Verteilung des aktuellen SISE um den Wert des geschätzten SISE mit einer Gaussverteilung mit der Standardabweichung beschrieben werden kann, die als Signal-In-Space-Monitoring-Accuracy (SISMA) bezeichnet wird. SISMA ist also die Genauigkeit der Schätzung des SISE für einen Satelliten und wird ebenfalls an die Nutzungssysteme übertragen.

Beim bisherigen Konzept von Galileo für die Übertragung von SISMA wird für jeden Satelliten ein skalarer Wert übertragen, der für jede mögliche Position eines Nutzungssystems (Benutzerposition) konservativ und gleich ist. Wenn der gleiche konservative skalare Wert für die Abschätzung eines Fehlers verwendet wird, führt dies allerdings auch zu einer konservativen Abschätzung für die Generierung der Statusbenachrichtigungen.

Ziel der vorliegenden Erfindung ist es daher, diese Abschätzung deutlich weniger konservativ zu machen als bisher.

Diese Ziel wird durch ein Verfahren zur Optimierung von Statusbenachrichtigungen in einem Satellitennavigationssystem mit den Merkmalen von Anspruch 1 und eine Vorrichtung zur Optimierung von Statusbenachrichtigungen in einem Satellitennavigationssystem mit den Merkmalen von Anspruch 6 erreicht. Weitere Ausgestaltungen der Erfindung sind Gegenstand der abhängigen Ansprüche.

Ein wesentlicher Gedanke der Erfindung besteht darin, eine ortsabhängige Statusbenachrichtigung in einem Satellitennavigationssystem einzuführen, wodurch die bisher bei Galileo für jeden Ort gleich konservative Abschätzung für die Generierung von Statusbenachrichtigungen besser an lokale Gegebenheiten angepasst werden und damit wesentlich weniger konservativ als bei bisherigen Integritätskonzepten sein kann.

Die Erfindung betrifft nun gemäß einer Ausführungsform ein Verfahren zur Optimierung von Statusbenachrichtigungen in einem Satellitennavigationssystem, das ein Raumsegment mit mehreren Satelliten, die Navigationssignale zum Empfangen und Auswerten durch Nutzungssysteme für die Positionsbestimmung aussenden, und ein Bodensegment mit mehreren Beobachtungsstationen, welche die Satelliten überwachen, umfasst, wobei ein Schwellwert für die Meldung, dass der Fehler eines Satelliten nicht mehr akzeptabel ist, ortsabhängig festgelegt wird. Die ortsabhängige Festlegung des Schwellwerts für die Statusbenachrichtigung, dass der Fehler eines Satelliten nicht mehr akzeptabel ist, ermöglicht die Optimierung von Statusbenachrichtigungen dahingehend, dass sie besser an lokale Gegebenheiten angepasst werden können. Beispielsweise können Statusbenachrichtigungen und damit die Leistungsfähigkeit eines Satellitennavigationssystems über Europa so eingestellt werden, dass damit Landungen von Flugzeugen möglich sind, wohingegen über den Ozeanen die Statusbenachrichtigungen derart konfiguriert werden können, dass nur die Leistungsfähigkeit für Überlandflüge erreicht wird. Insgesamt kann also aufgrund der ortsabhängigen Statusbenachrichtigungen die Leistungsfähigkeit eines Satellitennavigationssystems verbessert werden. Das erfindungsgemäße Verfahren kann in einen Nutzungssystem als Algorithmus implementiert sein, der die Statusbenachrichtigungen des Nutzungssystems optimiert, insbesondere an die aktuelle Position des Nutzungssystems anpasst.

Das (benutzer-)ortsabhängige oder vom Satelliten aus gesehen richtungsabhängiges Festlegen des Schwellwerts kann insbesondere das Verwenden (benutzer-)ortsabhängiger oder vom Satelliten aus gesehen richtungsabhängiges Fehlerverteilungsfunktionen zur Beschreibung eines Fehlers des Satellitensignals umfassen. Beim bisherigen Integritätskonzept von Galileo ist dagegen nur eine Fehlerverteilungsfunktion für alle Richtungen, von denen aus ein Nutzungssystem Navigationssignale eines Satelliten empfangen können, vorgesehen.

Insbesondere kann das ortsabhängige oder vom Satelliten aus gesehen richtungsabhängiges Festlegen des Schwellwerts das Berechnen von richtungsabhängigen Schwellwerten für die Meldung, dass der Fehler eines Satelliten nicht mehr akzeptabel ist, mit den ortsabhängigen Fehlerverteilungsfunktionen umfassen. Für verschiedene Richtungen und damit verschiede Gebiete können damit unterschiedliche Schwellwerte festgelegt werden, beispielsweise kann ein wesentlich größerer Schwellwert für ein Gebiet mit geringeren Integritätsanforderungen wie ein Ozean als für ein Gebiet mit höheren Integritätsanforderungen wie einen Flughafen festgelegt werden.

Die SISA und SISMA weisen in diesem neuen Konzept nicht nur eine von der Satellitenposition abhängig, sonderen auch noch zusätzlich von der Benutzerposition oder Richtung vom Satelliten zum Benutzer.

Als Statusbenachrichtigung kann eine Signalisierung erfolgen, dass das Satellitensignal nicht zu verwenden ist, wenn für eine bestimmte Richtung der entsprechend berechnete richtungsabhängige Schwellwert kleiner als der geschätzte Fehler des Navigationssignals in dieser Richtung ist. Die Signalisierung kann beispielsweise eine Information umfassen, dass der geschätzte Fehler für eine bestimmte Region größer als der für diese Region berechnete Schwellwert ist. Es kann aber auch schon eine Signalisierung, dass ein Signal nicht mehr für die Navigation verwendet werden soll, erfolgen, sobald in eine Richtung der geschätzte Fehler des Navigationssignals größer als der berechnete Schwellwert für diese Richtung ist.

Gemäß einer weiteren Ausführungsform der Erfindung ist ein Nutzungssystem für ein Satellitennavigationssystem, insbesondere ein mobiles Navigationsgerät, vorgesehen, das zur Benutzung mit einem Verfahren nach der Erfindung und wie vorstehend beschrieben ausgebildet ist.

Weiterhin sieht eine Ausführungsform der Erfindung eine Vorrichtung zur Optimierung von Statusbenachrichtigungen in einem Satellitennavigationssystem vor, das ein Raumsegment mit mehreren Satelliten, die Navigationssignale zum Empfangen und Auswerten durch Nutzungssysteme für die Positionsbestimmung aussenden, und ein Bodensegment mit mehreren Beobachtungsstationen, welche die Satelliten überwachen, umfasst, wobei die Vorrichtung derart ausgebildet ist, dass ein Schwellwert für die Meldung, dass der Fehler eines Satelliten nicht mehr akzeptabel ist, ortsabhängig (sowohl von der Benutzerposition wie auch von der Satellitenposition) festgelegt wird.

Die Vorrichtung kann insbesondere zum Ausführen eines Verfahrens nach der Erfindung ausgebildet sein.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in der einzigen Fig. ein Satellitennavigationssystem mit einem Ausführungsbeispiel einer Vorrichtung zur Optimierung von Statusbenachrichtigungen gemäß der Erfindung; und

Im Folgenden können gleiche und/oder funktional gleiche Elemente mit den gleichen Bezugszeichen versehen sein.

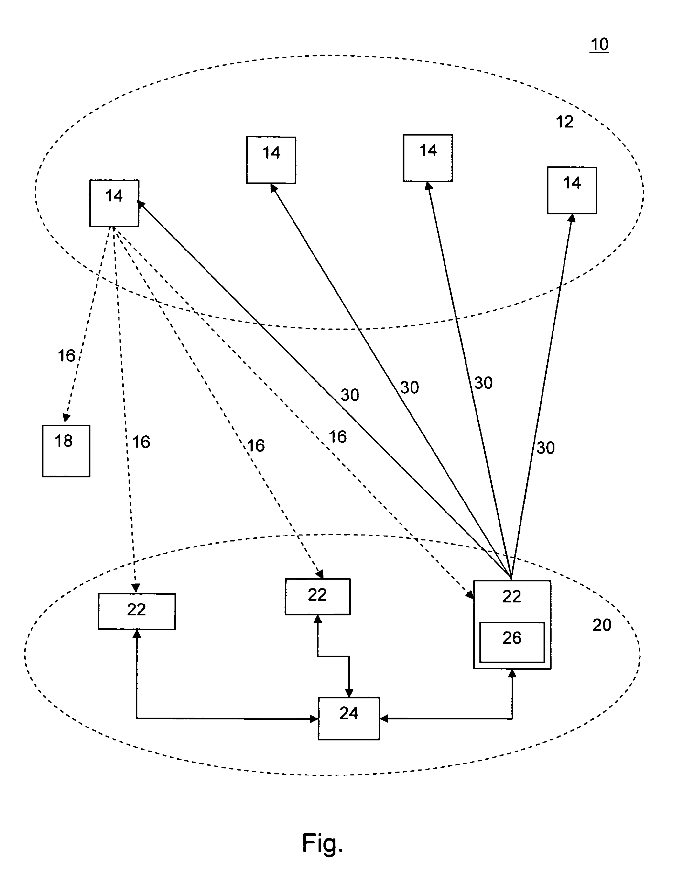

In Fig. 1 ist ein Satellitennavigationssystem 10 mit einem Raumsegment 12 und einem Bodensegment 20 dargestellt. Das Raumsegment 12 umfasst mehrere Satelliten 14, die auf ihrem jeweiligen Orbit um das Bodensegment 20 kreisen. Jeder Satellit sendet Navigationssignale 16 (SIS) aus, die von Nutzungssystemen 18 wie beispielsweise mobilen Navigationsgeräten sowie von Beobachtungsstationen 22 des Bodensegments 20 empfangen werden können. Die Beobachtungsstationen 22 sind insbesondere zur Überwachung der Satelliten 14 und Koordination von beispielsweise der Integritätskommunikation im Satellitennavigationssystem 10 vorgesehen. Hierzu werten Sie die empfangen Navigationssignale 16 aus, indem sie die mit jedem Navigationssignal 16 übertragenen Daten eines Satelliten 14, insbesondere Orbit und Zeitpunkt der Signalerzeugung sowie Signalstruktur überprüfen. Die Beobachtungsstationen 22 sind ferner mit einer zentralen Steuerstation 24 kommunikationsmäßig verbunden, in der alle Messdaten der Beobachtungsstationen 22 zusammenlaufen und ausgewertet werden. Die zentrale Steuerstation 24 kann ferner das Aussenden von Statusbenachrichtigungen 30 an die Satelliten 14 über Beobachtungsstationen 22 steuern. Hierzu kann sie Übertragungsmittel 26 in einer Beobachtungsstation 22 ansteuern, dass sie Statusbenachrichtigungen zum Satellitennavigationssystem 10, insbesondere zu den von den Satelliten 14 ausgesandten SIS, über die Satelliten 14 an Nutzungssysteme 18 übertragen werden. Die Statusbenachrichtigungen 30 können wie bei Galileo Informationen zum Zustand eines Satelliten enthalten, beispielsweise das Integrity Flag IF, welches den Status eines Satelliten als "Don't Use", "Not Monitored" oder "OK" mit einem entsprechenden SISMA-Wert angegeben kann.

Um die Statusbenachrichtigungen im Satellitennavigationssystem 10 zu optimieren, wird nach der Erfindung der Schwellwert für die Meldung, dass der Fehler eines Satelliten größer ist als akzeptabel, ortsabhängig festgelegt werden. Dadurch kann erreicht werden, dass in Richtungen, in denen Fehler besser beobachtet werden können, typischerweise in Regionen mit dichter angeordneten Beobachtungsstationen des Satellitennavigationssystem, der Schwellwert bei gleicher Fehlalarmwahrscheinlichkeit kleiner gewählt werden kann. Die ortsabhängige Festlegung erfolgt dabei in Analogie zur bisherigen Festlegung des Schwellwerts, wobei lediglich das Overbounding anders durchgeführt wird. Wurde bei bisherigen Integritätskonzepten von Satellitennavigationssystemen wie Galileo das Overbounding so durchgeführt, dass eine gausähnliche Funktion die Fehlerverteilung bzw. Fehlerverteilungen für alle Richtungen, in welchen vom Satelliten aus gesehen sich Benutzer befinden können, overbounden, so wird dies erfindungsgemäß nun für jede Richtung einzeln gemacht und der Schwellwert entsprechend berechnet. Wenn dann für eine Richtung der so ermittelte Schwellwert kleiner ist als der geschätzte Fehler in dieser Richtung, kann das Satellitennavigationssignal als nicht zu verwenden signalisiert werden. Dadurch wird es insbesondere ermöglicht, die Leistungsfähigkeit des Satellitennavigationssystems regional durch die Installation von mehr Bodenstationen zu erhöhen. So kann zum Beispiel die Leistungsfähigkeit eines Satellitennavigationssystems über Europa so eingestellt werden, dass es für die Navigation bei Landungen mit Flugzeugen verwendet werden kann, wohingegen über den Ozeanen nur die Leistungsfähigkeit für Überlandflüge erreicht werden kann.

Die Festlegung des ortsabhängigen Schwellwerts kann in einem Nutzungssystem erfolgen. Nach dem Integritätskonzept von Galileo kann in einem Nutzungssystem das Integritätsrisiko aus der folgenden Information berechnet werden, die zum Teil an ein Nutzungssystem vom Satelliten übertragen wird:

- Integrity Flag;

- SISA-Wert für jeden Satelliten;

- SISMA-Wert für jeden Satelliten; und

- Schwellwert berechnet aus SISA und SISMA.

Der Schwellwert THi wird hierbei für jeden Satelliten i bei Galileo nach der folgenden Formel berechnet:

$$THi = kpFA * sqr(SISAi^2 + SISMAi^2),$$

wobei sqr die Wurzelfunktion und kpFA die Wahrscheinlichkeit der erlaubten Fehlalarme bezeichnet und typischerweise 5,212 ist.

Wie bereits in der Beschreibungseinleitung erwähnt ist die SISA eine Voraussage der Verteilung des SISE durch eine Gaussverteilung mit der kleinsten Standardabweichung, welche durch Overbounding der SISE-Verteilung für ein fehlerfreies SIS gebildet wird. Da der SISE nicht direkt gemessen werden kann, wird er anhand von Messungen geschätzt. Diese Schätzung wird als estimated SISE SISEest bezeichnet. Die Differenz zwischen dem tatsächlichen SISE und SISEest besitzt wiederum eine Verteilung, die durch Overbounding mit einer Gaussverteilung mit einer Standardabweichung, der SISMA gebildet werden kann.

Um eine ortsabhängige Schwellwertbestimmung zu ermöglichen, können nun nach der Erfindung verschiedene ortsabhängige SISAi(x) und SISMAi(x) für jeden Satelliten i an Nutzungssysteme übertragen werden (der Parameter x bezeichnet hierbei die Ortsabhängigkeit). Damit ist jedes Nutzungssystem in der Lage, abhängig von seiner aktuellen Position x einen passenden ortsabhängigen Schwellwert gemäß der folgenden Formel zu berechnen:

$$THi (x)= kpFA * sqr(SISAi(x)^2 + SISMAi(x)^2).$$

Dadurch kann ein Nutzungssystem abhängig von seiner Position entscheiden, wann ein SIS eines Satelliten i als fehlerhaft oder als akzeptabel eingestuft wird.

SISAi(x) kann zum Beispiel eine Funktion eine Matrix sein, welche den Fehlerellipsoid beschreibt und von vorne und hinten mit dem Richtungsvektor vom Satelliten zum Benutzer multipliziert wird.

Für SISMAi(x) kann auch eine Matrix gewählt werden, doch bieten sich auch Funktionen an, die aus den Koordinaten der Beobachtungsstationen und der Verfügbarkeit von Beobachtungen von diesen Beobachtungsstationen die Schätzgenauigkeit für die einzelnen Richtungen x berechnen.

**Bezugzeichen**

| 10 | Satellitennavigationssystem |
|----|------------------------------|
| 12 | Raumsegment |
| 14 | Satelliten |
| 16 | Navigationssignale |
| 18 | Nutzungssysteme |
| 20 | Bodensegment |
| 22 | Beobachtungsstationen |
| 24 | zentrale Steuerstation |
| 26 | Übertragungsmittel |
| 30 | Statusbenachrichtigungen |

**Patentansprüche**

1. Verfahren zur Optimierung von Statusbenachrichtigungen in einem Satellitennavigationssystem (10), das ein Raumsegment (12) mit mehreren Satelliten (14), die Navigationssignale (16) zum Empfangen und Auswerten durch Nutzungssysteme (18) für die Positionsbestimmung aussenden, und ein Bodensegment (20) mit mehreren Beobachtungsstationen (22), welche die Satelliten (14) überwachen, umfasst, wobei ein Schwellwert für die Meldung, dass der Fehler eines Satelliten nicht mehr akzeptabel ist, ortsabhängig festgelegt wird.

2. Verfahren nach Anspruch 1,
   **dadurch gekennzeichnet, dass**
   das ortsabhängige Festlegen des Schwellwerts das Verwenden ortsabhängiger Fehlerverteilungsfunktionen zur Beschreibung eines Fehlers des Satellitensignals umfasst.

3. Verfahren nach Anspruch 2,
   **dadurch gekennzeichnet, dass**
   das ortsabhängige Festlegen des Schwellwerts ferner das Berechnen von richtungsabhängigen Schwellwerten für die Meldung, dass der Fehler eines Satelliten nicht mehr akzeptabel ist, mit den ortsabhängigen Fehlerverteilungsfunktionen umfasst.

4. Verfahren nach Anspruch 3,
   **dadurch gekennzeichnet, dass**
   als Statusbenachrichtigung eine Signalisierung erfolgt, dass das Satellitensignal nicht zu verwenden ist, , wenn für eine bestimmte Richtung der entsprechend berechnete Schwellwert kleiner als der geschätzte Fehler des Navigationssignals in dieser Richtung ist.

5. Nutzungssystem (18) für ein Satellitennavigationssystem, insbesondere mobiles Navigationsgerät, das zur Benutzung mit einem Verfahren nach einem der vorhergehenden Ansprüche ausgebildet ist.

6. Vorrichtung (24) zur Optimierung von Statusbenachrichtigungen in einem Satellitennavigationssystem (10), das ein Raumsegment (12) mit mehreren Satelliten (14), die Navigationssignale (16) zum Empfangen und Auswerten durch Nutzungssysteme (18) für die Positionsbestimmung aussenden, und ein Bodensegment (20) mit mehreren Beobachtungsstationen (22), welche die Satelliten (14) überwachen, umfasst, wobei die Vorrichtung derart ausgebildet ist, dass ein Schwellwert für die Meldung, dass der Fehler eines Satelliten nicht mehr akzeptabel ist, ortsabhängig festgelegt wird.

7. Vorrichtung nach Anspruch 6,
   **dadurch gekennzeichnet, dass**
   sie zum Ausführen eines Verfahrens nach einem der Ansprüche 1 bis 4 ausgebildet.

Fig.

Europäisches
Patentamt

European
Patent Office

Office européen
des brevets

# EUROPÄISCHER RECHERCHENBERICHT

Nummer der Anmeldung

EP 09 01 0692

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | BLOMENHOFER B ET AL: "GNSS/Galileo Global and Regional Integrity Performance Analysis" ION GNSS. INTERNATIONAL TECHNICAL MEETING OF THE SATELLITEDIVISION OF THE INSTITUTE OF NAVIGATION, WASHINGTON, DC, US, 21. September 2004 (2004-09-21), Seiten 2158-2168, XP002415356 * Seiten 2165-2166, Abschnitt "Discussion of Multi-Regional Integrity Concepts for Galileo" * ----- | 1-7 | INV. G01S1/00 |
| X | AIDEN DEEM AND YANMING FENG: "A Simulation Study for a Galileo External Regional Integrity System Configured for the Australasian Region" PROCEEDINGS OF IGNSS SYMPOSIUM 2007, 4. Dezember 2007 (2007-12-04), XP002557633 Sydney, Australia * das ganze Dokument * ----- | 1-7 | |
| X | JOURNO S ET AL: "Producing the Galileo Services From the Ground Mission Segment (GMS)" ION GNSS. INTERNATIONAL TECHNICAL MEETING OF THE SATELLITEDIVISION OF THE INSTITUTE OF NAVIGATION, WASHINGTON, DC, US, Nr. 19TH, 26. September 2006 (2006-09-26), Seiten 504-519, XP002521138 * Abbildung 8 * * Seite 511 * ----- | 1-7 | RECHERCHIERTE SACHGEBIETE (IPC) G01S |

Der vorliegende Recherchenbericht wurde für alle Patentansprüche erstellt

| Recherchenort | Abschlußdatum der Recherche | Prüfer |
|---|---|---|
| München | 26. November 2009 | Hekmat, Taymoor |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.............................................................
& : Mitglied der gleichen Patentfamilie, übereinstimmendes Dokument

EPO FORM 1503 03.82 (P04C03)